# EUROPÄISCHE PATENTSCHRIFT

(11) **EP 3 409 542 B1**
(45) Veröffentlichungstag und Bekanntmachung des Hinweises auf die Patenterteilung: **05.02.2020**
(21) Anmeldenummer: 18172520.1
(22) Anmeldetag: 16.05.2018
(51) Int. Cl.: B60R 21/36

(54) **TECHNIK ZUR VERLETZUNGSMINDERUNG BEI ASYMMETRISCHEN KOLLISIONEN**
TECHNIQUE FOR REDUCING INJURY CAUSED BY ASYMMETRIC COLLISION
TECHNIQUE PERMETTANT DE LIMITER LES DOMMAGES LORS DES COLLISIONS ASYMÉTRIQUES

(30) Priorität: 02.06.2017 DE 102017112276
(43) Veröffentlichungstag der Anmeldung: 05.12.2018
(73) Patentinhaber: MAN Truck & Bus SE, 80995 München (DE)
(72) Erfinder: Wagner, Philipp, 86316 Friedberg (DE); Fleischhacker, Jan, 82140 Olching (DE)
(74) Vertreter: v. Bezold & Partner Patentanwälte - PartG mbB

(56) Entgegenhaltungen:
- DE-A1- 10 121 630
- DE-A1- 10 356 572
- DE-A1-102004 027 171
- US-B1- 9 802 568

## Beschreibung

Die vorliegende Erfindung betrifft eine Technik zur Verletzungsminderung beim Zusammenstoß ungleicher Verkehrsteilnehmer. Insbesondere sind eine Vorrichtung und eine Anordnung zur Verletzungsminderung eines Verkehrsteilnehmers beim Zusammenstoß mit einem Kraftfahrzeug bereitgestellt.

Beim Zusammenstoß eines Kraftfahrzeugs mit einem schwächeren Unfallgegner, beispielsweise einem Fußgänger oder Radfahrer, führt bereits das ungleiche Massenverhältnis zu größeren Beschleunigungskräften, die auf den leichteren Unfallgegner wirken. Zur Minderung solcher Beschleunigungskräfte sind aus dem Dokument US 6,920,954 B2 Personenkraftwagen bekannt, die einen Zusammenstoß mit einem Fußgänger antizipieren und außerhalb des Fahrzeugs angeordnete Airbags im Bereich der Motorhaube und der Windschutzscheibe öffnen.

Jedoch werden beim Zusammenstoß eines Fußgängers oder Radfahrers mit einem Kraftfahrzeug oftmals Verletzungen des Fußgängers oder Radfahrers nicht nur beim initialen ersten Aufschlag am Kraftfahrzeug verursacht, sondern auch durch einen späteren zweiten Aufschlag auf der Fahrbahn. Insbesondere bei einem Zusammenstoß an der Fahrzeugfront wird der Fußgänger oder Radfahrer durch den ersten Aufschlag auf die Geschwindigkeit des Kraftfahrzeugs beschleunigt. Im Allgemeinen kommt das Kraftfahrzeug erst nach dem ersten Aufschlag zum Stillstand. Dadurch wird der Fußgänger oder Radfahrer auf die Fahrbahn oder weitere verletzungsgefährdende Hindernisse am Fahrbahnrand geschleudert, beispielsweise eine Bordsteinkante.

Das Dokument US 9,340,178 B1 beschreibt einen Frontbereich eines Personenkraftwagens, auf dem eine zerbrechliche Außenhaut über einem Haftbelag aufgebracht ist. Beim ersten Aufschlag eines Fußgängers am Frontbereich zerbricht die Außenhaut, wodurch der Fußgänger in Kontakt mit dem Haftbelag kommt. Dadurch soll der Fußgänger unmittelbar nach dem ersten Aufschlag am Frontbereich des Personenkraftwagens gehalten werden, um einen zweiten Aufschlag zu verhindern.

Jedoch kann eine wirksame Fläche des Haftbelags durch Bruchstücke der Außenhaut verringert sein oder eine Haftstärke des Haftbelags durch Alterung über die Nutzungsdauer eines Kraftfahrzeugs gemindert sein. Auch kann eine zuverlässige Haftverbindung durch das Tragen weiter Kleidungstücke verhindert werden. Und selbst wenn der Fußgänger mit dem Oberkörper am Frontbereich anhaftet, können beispielsweise seine Beine unter das Fahrzeug geraten. Ferner kann die Außenhaut in zahlreichen unerwünschten Fällen zerbrechen, beispielsweise durch Hagelschlag, wodurch Feuchtigkeit zwischen die Außenhaut und den Haftbelag eindringt und eine aufwendige Reparatur der Fahrzeugbeschichtungen notwendig wird.

Das Dokument DE 101 21 630 A1 beschreibt eine trichterförmige Sicherheitseinrichtung für ein Personenkraftfahrzeug, die dazu ausgebildet ist, dass ein Unfallopfer direkt in einem Aufnahmeraum vor der Fahrzeugfront aufgenommen wird, statt nach einer Primärkollision zuerst auf den Fronthaubenbereich geschleudert zu werden. Optional kann die Sicherheitseinrichtung einen Rückhalteairbag umfassen, der aufgrund der Primärkollision aufgeblasen wird.

Somit ist es Aufgabe der vorliegenden Erfindung, eine Technik zur Verletzungsminderung bei asymmetrischen Kollisionen im Straßenverkehr anzugeben. Eine weitergehende oder alternative Aufgabe ist, den Rückprall oder das Überfahren eines schwächeren Unfallgegners zu verhindern.

Diese Aufgabe oder Aufgaben werden durch eine Vorrichtung zur Verletzungsminderung und eine Airbag-Anordnung mit den Merkmalen der unabhängigen Ansprüche gelöst.

Gemäß einem Aspekt ist eine Vorrichtung zur Verletzungsminderung eines Verkehrsteilnehmers beim Zusammenstoß mit einem Kraftfahrzeug bereitgestellt. Die Vorrichtung umfasst mindestens einen Sensor oder eine Sensorschnittstelle für Sensordaten zum Erfassen eines Verkehrsteilnehmers im Fahrweg des Kraftfahrzeugs. Die Vorrichtung umfasst ferner eine Treiberschnittstelle zum Füllen einer Airbag-Anordnung im Frontbereich des Kraftfahrzeugs. Die Airbag-Anordnung umfasst mindestens einen Aufprallabschnitt, der dazu ausgebildet ist, Kräfte in Fahrtrichtung auf den Verkehrsteilnehmer zu übertragen, und mindestens einen Rückhalteabschnitt, der dazu ausgebildet ist, Kräfte entgegen der Fahrtrichtung auf den Verkehrsteilnehmer zu übertragen. Die Vorrichtung umfasst ferner eine mit der Treiberschnittstelle verbundene Steuerung, die dazu ausgebildet ist, in Reaktion auf die Erfassung des Verkehrsteilnehmers den mindestens einen Aufprallabschnitt zu einem ersten Zeitpunkt zu füllen, und den mindestens einen Rückhalteabschnitt zu einem späteren zweiten Zeitpunkt zu füllen.

Indem nicht nur der Aufprall des Verkehrsteilnehmers durch den Aufprallabschnitt abgefedert wird, sondern auch ein Abrutschen oder Zurückprallen des Verkehrsteilnehmers auf die Straße durch den Rückhalteabschnitt verhindert wird, können Ausführungsbeispiele der Vorrichtung die Verletzungsschwere bzw. Letalität des Verkehrsteilnehmers bei einer Kollision im Frontbereich des Kraftfahrzeugs reduzieren.

Der Verkehrsteilnehmer kann ein im Vergleich zum Kraftfahrzeug schwächerer Unfallgegner sein. Der Verkehrsteilnehmer kann sich vom Kraftfahrzeug durch eine wesentlich geringere Masse und/oder Größe, insbesondere Höhe, unterscheiden. Beispielsweise können das Fahrgestell und/oder ein Schwerpunkt des Kraftfahrzeugs höher über der Fahrbahn liegen als ein Schwerpunkt des Verkehrsteilnehmers. Die Asymmetrie zwischen Verkehrsteilnehmer und Kraftfahrzeug kann besonders ausgeprägt sein, falls das Kraftfahrzeug ein Nutzfahrzeug ist, beispielsweise da das Fahrgestell des Nutzfahrzeugs wesentlich höher über der Fahrbahn liegt als das eines Personenkraftwagens. So kann ohne die Vorrichtung beim Nutzfahrzeug für den Verkehrsteilnehmer eine erhöhte Gefahr bestehen, unter das Kraftfahrzeug zu geraten oder zu Boden geschleudert zu werden.

Ausführungsbeispiele der Vorrichtung können verhindern, dass der Verkehrsteilnehmer zu Boden geschleudert wird und/oder unter das Kraftfahrzeug gerät, indem der Verkehrsteilnehmer durch den Rückhalteabschnitt von der Fahrbahn ferngehalten wird. Beispielsweise kann der Verkehrsteilnehmer an der Fahrzeugfront mitgeführt werden, bis das Kraftfahrzeug zum Stillstand kommt. So kann auch bei einem extremen Massenverhältnis zwischen Verkehrsteilnehmer und Kraftfahrzeug ein Zurückschleudern oder Überrollen des Verkehrsteilnehmers verhindert werden.

Die zeitlich und/oder funktional abgestufte Steuerung der Abschnitte der Airbag-Anordnung kann auch als mehrstufiges Airbag-System bezeichnet werden. Aufgrund der sich an eine Betätigung des Aufprallabschnitts zum ersten Zeitpunkt anschließenden Betätigung des Rückhalteabschnitts zum zweiten Zeitpunkt, kann die Vorrichtung als aktive Rückhaltevorrichtung bezeichnet werden.

Der Aufprallabschnitt kann dazu ausgebildet sein, eine Impulsänderung des Verkehrsteilnehmers durch das Kraftfahrzeug über eine Aufprallfläche und Aufprallzeit zu verteilen. Der Rückhalteabschnitt kann dazu ausgebildet sein, sich um den Verkehrsteilnehmer zu schließen, beispielsweise um ein Umstoßen, Wegschleudern oder Überrollen des Verkehrsteilnehmers zu verhindern.

Das Erfassen des Verkehrsteilnehmers im Fahrweg des Kraftfahrzeugs kann eine Bestimmung des Verkehrsteilnehmers und/oder das Bestimmen einer Unfallsituation umfassen.

Die Fahrtrichtung kann sich auf die Längsrichtung des Kraftfahrzeugs nach vorne beziehen, also eine im Bezugsystem des Kraftfahrzeugs festgelegte Richtung sein. Alternativ oder ergänzend kann die Fahrtrichtung von einer momentanen Fahrgeschwindigkeit und/oder einem Lenkwinkel des Kraftfahrzeugs abhängen.

Die Airbag-Anordnung kann vor dem Füllen zusammengefaltet sein. Der Aufprallabschnitt kann vor dem oder bis zum ersten Zeitpunkt zusammengefaltet sein. Der Rückhalteabschnitt kann vor dem oder bis zum zweiten Zeitpunkt zusammengefaltet sein.

Beispielsweise kann ein Füllen des Aufprallabschnitts zum ersten Zeitpunkt beginnen. Ein Füllen des Rückhalteabschnitts kann zum zweiten Zeitpunkt beginnen. Das Füllen eines Abschnitts kann eine Druckbeaufschlagung mittels Treibgases und/oder eine Ausbreitung des Treibgases innerhalb des zunächst zusammengefalteten Abschnitts umfassen. Die Steuerung der Airbag-Anordnung über mehrere Zeitpunkte kann durch eine mehrstufige Aktivierung der Airbag-Anordnung realisiert sein.

Der erste Zeitpunkt kann vor einem Zusammenstoß zwischen Verkehrsteilnehmer und Kraftfahrzeug sein. Der zweite Zeitpunkt kann durch ein Zusammenwirken des Verkehrsteilnehmers und des gefüllten Aufprallabschnitts bestimmt sein. Beispielsweise kann ein Drucksensor im oder am gefüllten Aufprallabschnitt einen Aufprall des Verkehrsteilnehmers am gefüllten Aufprallabschnitt erfassen.

Jeder Abschnitt der Airbag-Anordnung kann als eine Hülle ausgeführt sein, die im gefüllten Zustand des jeweiligen Abschnitts eine räumliche Form des jeweiligen Abschnitts bestimmt. Die Abschnitte der Airbag-Anordnung können an Verbindungsstellen miteinander verbunden sein. Die Form der einzelnen Abschnitte und die Verbindungsstellen können im gefüllten Zustand eine räumliche Anordnung der Abschnitte relativ zum Kraftfahrzeug bestimmen. Die räumliche Anordnung kann Position und Orientierung des jeweiligen Abschnitts bestimmen. Die Verbindungsstellen können zur Übertragung von Drehmomenten zwischen den Abschnitten ausgebildet sein. Die Verbindungsstellen können Verbindungsflächen oder mehrere Verbindungspunkte umfassen. Der Aufprallabschnitt kann auch als Aufprall-Airbag bezeichnet werden. Der Rückhalteabschnitt kann auch als Fang-Airbag bezeichnet werden.

Zum zweiten Zeitpunkt kann der Verkehrsteilnehmer eine durch den späteren gefüllten Zustand vorbestimmte Position des Rückhalteabschnitts (z. B. bezüglich des Kraftfahrzeugs) entgegen der Fahrtrichtung passiert haben.

Die Treiberschnittstelle kann eine Treiberschaltung und/oder eine Signalleitung zur Steuerung einer Treiberschaltung umfassen. Der Begriff "Treiberschnittstelle" kann mehrere Schnittstellen (z. B. Kontakte, Leitungen, elektrische und/oder mechanische Verbindungen) umfassen, beispielsweise für mehrere Airbag-Abschnitte und/oder verschiedene Funktionen (Füllen und/oder Entlüften). Diese mehreren Schnittstellen können nebeneinander oder räumlich getrennt angeordnet sein.

Das Treibgas kann von mindestens einem Gasgenerator abgegeben werden. Das Treibgas kann lokal durch eine chemische Reaktion erzeugt und/oder aus einem Druckspeicher (beispielsweise als Kaltgas, insbesondere Stickstoff) abgegeben werden. Mindestens einer oder jeder der Gasgeneratoren kann einen pyrotechnischen Gasgenerator oder einen Kaltgasgenerator umfassen. Der Kaltgasgenerator kann ein Elektromagnetventil umfassen, über das der Druckspeicher mit dem jeweiligen Abschnitt in Fluidverbindung gebracht wird.

Die Airbag-Anordnung kann nach dem zweiten Zeitpunkt zwischen dem mindestens einen Aufprallabschnitt und dem mindestens einen Rückhalteabschnitt einen Zwischenraum zur Aufnahme des Verkehrsteilnehmers ausbilden. Der Verkehrsteilnehmer kann für ein Zeitfenster nach einem ersten Aufschlag am Frontbereich des Kraftfahrzeugs (beispielsweise bis zum Stillstand des Kraftfahrzeugs) im Zwischenraum aufgenommen werden. Durch die Aufnahme des Verkehrsteilnehmers im Zwischenraum kann ein Einklemmen oder Überrollen des Verkehrsteilnehmers verhinderbar sein. Der Zwischenraum kann auch als Überlebensraum bezeichnet werden.

Die Aufnahme im Zwischenraum kann insbesondere vor einem Überrollen schützen bei Kraftfahrzeugen, die aufgrund ihrer Fahrgestellhöhe oder Bodenfreiheit nicht den Verkehrsteilnehmer vor sich wegschieben können und/oder bei Kraftfahrzeugen, die aufgrund ihrer Masse (beispielsweise auch bei kürzester Reaktion des Fahrers oder einem Bremseingriff eines Notbremsassistenten) nicht vor dem Verkehrsteilnehmer zum Stehen kommen können. Zu solchen Kraftfahrzeugen können insbesondere Nutzfahrzeuge gehören.

Der mindestens eine Rückhalteabschnitt kann den Zwischenraum in Fahrtrichtung begrenzen. Der mindestens eine Rückhalteabschnitt kann im gefüllten Zustand an einer vom Kraftfahrzeug in Fahrtrichtung beabstandeten Stelle angeordnet sein.

Der mindestens eine Aufprallabschnitt kann den Zwischenraum zum Kraftfahrzeug begrenzen. Der Rückhalteabschnitt kann an vom Kraftfahrzeug abgewandten Stellen des Aufprallabschnitts mit dem Aufprallabschnitt verbunden sein. Jeder Rückhalteabschnitt kann jeweils an einem vom Kraftfahrzeug abgewandten Ende des mindestens einen Aufprallabschnitts mit dem mindestens einen Aufprallabschnitt verbunden sein. Alternativ oder ergänzend kann der mindestens eine Rückhalteabschnitt über sich im gefüllten Zustand in Fahrtrichtung erstreckende Abschnitte im Frontbereich des Kraftfahrzeugs angebunden sein.

Die Vorrichtung kann dazu ausgebildet sein, den mindestens einen Aufprallabschnitt und/oder den mindestens einen Rückhalteabschnitt bis zum Stillstand des Kraftfahrzeugs gefüllt zu halten. Der Aufprallabschnitt und/oder der Rückhalteabschnitt können fluiddicht sein. Alternativ oder ergänzend kann ein Gasgenerator einen Druck im Aufprallabschnitt und/oder Rückhalteabschnitt aufrechterhalten, beispielsweise indem der Gasgenerator kontinuierlich Treibgas (beispielsweise das Kaltgas) bis zum Stillstand abgibt.

Die Steuerung kann dazu ausgebildet sein, den Aufprallabschnitt und/oder den Rückhalteabschnitt beim oder nach dem Stillstand des Kraftfahrzeugs zu entleeren. Hierzu kann eine Entlüftungsöffnung am entsprechenden Abschnitt geöffnet werden.

Optional kann die Hülle eines oder jedes Abschnitts der Airbag-Anordnung plastisch sein. Beispielsweise kann die Hülle ein plastisch verformbares Netz oder Gewebe umfassen. Durch die Plastizität kann die Hülle Energie des Aufpralls des Verkehrsteilnehmers absorbieren. Alternativ oder ergänzend kann zum ersten und zweiten Zeitpunkt die Hülle des jeweiligen Abschnitts unter dem Druck des Treibgases plastisch geformt werden, und danach ohne Druckbeaufschlagung die Form beibehalten.

Im oder am mindestens einen Aufprallabschnitt und/oder mindestens einen Rückhalteabschnitt kann jeweils mindestens ein Gasgenerator zum Füllen des entsprechenden Abschnitts angeordnet sein. Jeder Gasgenerator kann über die Treiberschnittstelle mit der Steuerung betätigbar verbunden sein.

Der Gasgenerator kann innerhalb des jeweiligen Abschnitts angeordnet sein oder über einen oder mehrere Verteilerschläuche mit dem jeweiligen Abschnitt in Fluidverbindung stehen. Der Aufprallabschnitt kann in Fluidverbindung mit einem ersten Gasgenerator zur Abgabe von Treibgas stehen. Der Rückhalteabschnitt kann in Fluidverbindung mit einem zweiten Gasgenerator zur Abgabe von Treibgas stehen. Der erste Gasgenerator und der zweite Gasgenerator können über die Treiberschnittstelle zum Füllen des jeweiligen Abschnitts in Signalverbindung mit der Steuerung stehen.

Die zeitliche Verzögerung zwischen dem ersten Zeitpunkt und dem zweiten Zeitpunkt kann durch separate Signale (beispielsweise jeweils für den Aufprallabschnitt bzw. den Rückhalteabschnitt) der Steuerung bestimmt sein.

Mindestens einer der Rückhalteabschnitte kann mit mindestens einem der Aufprallabschnitte in Fluidverbindung stehen. In der Airbag-Anordnung können der Gasgenerator mit dem Aufprallabschnitt und der Aufprallabschnitt mit der Rückhalteabschnitt in Fluidverbindung stehen. Das Treibgas kann zum ersten Zeitpunkt den Aufprallabschnitt füllen. Zum zweiten Zeitpunkt kann das Treibgas über die Fluidverbindung den Rückhalteabschnitt füllen.

Die zeitliche Verzögerung zwischen dem ersten Zeitpunkt und dem zweiten Zeitpunkt kann durch ein in den mindestens einen Aufprallabschnitt abgegebenes Volumen des Treibgases und/oder eine Drosselwirkung der Fluidverbindung zwischen Aufprallabschnitt und Rückhalteabschnitt bestimmt sein. Zum ersten Zeitpunkt kann ein für das Füllen des mindestens einen Aufprallabschnitts bemessenes erstes Volumen abgegeben werden. Zum zweiten Zeitpunkt kann ein für das Füllen des mindestens einen Rückhalteabschnitts bemessenes zweites Volumen abgegeben werden. Der Aufprallabschnitt kann in Fluidverbindung mit einem mehrstufigen Gasgenerator zur Abgabe des Treibgases stehen. Eine erste Stufe des Gasgenerators kann das erste Volumen abgeben. Eine zweite Stufe des Gasgenerators kann das zweite Volumen abgeben. Der Rückhalteabschnitt kann ohne eigenen Gasgenerator sein.

Der Rückhalteabschnitt kann (beispielsweise nach dem ersten Zeitpunkt und/oder vor dem zweiten Zeitpunkt) zusammengefaltet im Aufprallabschnitt angeordnet sein. Alternativ oder ergänzend kann der Rückhalteabschnitt (beispielsweise nach dem ersten Zeitpunkt und/oder vor dem zweiten Zeitpunkt) invertiert an einer Innenfläche des Aufprallabschnitts anliegen. Zum zweiten Zeitpunkt kann der Rückhalteabschnitt aus dem Aufprallabschnitt heraus durch Inversion entfaltet und gefüllt werden.

Die gefüllte Airbag-Anordnung kann mindestens einen Seitenabschnitt umfassen, der den Zwischenraum quer zur Fahrtrichtung begrenzt. Der Seitenabschnitt kann ein Teilbereich des Aufprallabschnitts und/oder des Rückhalteabschnitts sein. Der Seitenabschnitt kann zur Übertragung von Querkräften (insbesondere Seitenführungskräften) auf den Verkehrsteilnehmer ausgebildet sein.

Bei einem Zusammenstoß mit Querbewegung (beispielsweise des Verkehrsteilnehmers relativ zum Kraftfahrzeug) kann der Verkehrsteilnehmer im Zwischenraum zwischen dem Aufprallabschnitt und dem Rückhalteabschnitt durch den Seitenabschnitt geführt oder im Zwischenraum gehalten werden, beispielsweise um ein Aufschlagen des Verkehrsteilnehmers auf der Fahrbahn, an einem Bordstein, einer Gegenfahrbahn oder einer Leitblanke zur verhindern. Alternativ oder wahlweise gesteuert kann bei einem Zusammenstoß mit Querbewegung der Verkehrsteilnehmer im Zwischenraum nur in Fahrtrichtung geführt sein, beispielsweise um ein kinematisches oder ballistisches Entweichen aus dem Frontbereich des Kraftfahrzeugs zu ermöglichen.

Die Airbag-Anordnung kann an beiden Seiten jeweils einen Seitenabschnitt aufweisen. Der Seitenabschnitt kann seitlich über eine Breite des Kraftfahrzeugs (beispielsweise der Breite des Frontbereichs) hinausragen.

Die gefüllte Airbag-Anordnung kann mindestens einen Bodenabschnitt umfassen, der den Zwischenraum zur Fahrbahn hin abschließt und/oder von einem Fahrwerksbereich des Kraftfahrzeugs räumlich trennt, wobei der Fahrwerksbereich das Fahrwerk, (Vorder-)Räder und/oder einen Unterboden des Kraftfahrzeugs umfassen kann.

Der Bodenabschnitt kann ein Teilbereich des Aufprallabschnitts und/oder des Rückhalteabschnitts sein. Beispielsweise kann der Bodenabschnitt durch eine asymmetrische Form des Aufprallabschnitts im gefüllten Zustand realisiert sein. Der Bodenabschnitt kann durch Ausbildung einer Fangnase am unteren Ende des Aufprallabschnitts realisiert sein. Der Bodenabschnitt kann sich über die Breite des Kraftfahrzeugs (beispielsweise der Breite des Frontbereichs) erstrecken.

Der Bodenabschnitt kann dazu ausgebildet und/oder kann im befüllten Zustand des Aufprallabschnitts dazu angeordnet sein, den Unfallgegner vom Boden wegzugheben und/oder den Fahrzeuguntergrund abzusichern.

An einer vom Zwischenraum abgewandten Seite kann der Bodenabschnitt eine Gleitfläche aufweisen. Die Gleitfläche kann durch eine Verstärkung der Hülle realisiert sein. Die Gleitfläche kann dazu ausgebildet sein, bis Stillstand des Kraftfahrzeugs über die Fahrbahn zu gleiten.

Der Bodenabschnitt und/oder mindestens einer der Seitenabschnitte können jeweils in Fluidverbindung mit dem Aufprallabschnitt und/oder dem Rückhalteabschnitt stehen. Der Bodenabschnitt und/oder der mindestens eine Seitenführungsabschnitt können jeweils ohne eigenen Gasgenerator sein.

Die gefüllte Airbag-Anordnung kann ferner dazu ausgebildet sein, Kräfte in vertikaler Richtung zu übertragen.

Der Aufprallabschnitt und/oder der Rückhalteabschnitt, insbesondere der Bodenabschnitt, können ferner dazu ausgebildet sein, Kräfte in der vertikalen Richtung zu übertragen. Die Kräfte in der vertikalen Richtung können eine Gewichtskraft (oder eine Komponente der Gewichtskraft) des Verkehrsteilnehmers umfassen.

Der Bodenabschnitt kann versteift sein, um ein den vertikalen Kräften entsprechendes Drehmoment (beispielsweise Biegemoment) zu einer Anbindungsstelle der Airbag-Anordnung im Frontbereich des Kraftfahrzeugs zu übertragen. Alternativ oder ergänzend kann die Gleitfläche die vertikalen Kräften auf die Fahrbahn übertragen.

Der Aufprallabschnitt und/oder der Rückhalteabschnitt können im zusammengefalteten Zustand hinter einer Frontschürze des Kraftfahrzeugs angeordnet sein. Der Aufprallabschnitt und/oder der Rückhalteabschnitt können an der Frontschürze oder an der Karosserie des Kraftfahrzeugs angebunden sein. Das Füllen des Aufprallabschnitts kann ferner die Frontschürze absenken und/oder in Fahrtrichtung versetzen.

Die Steuerung kann dazu ausgebildet sein, aufgrund der Sensordaten (beispielsweise durch Analyse eines Kamerabilds) einen kabinenlosen Verkehrsteilnehmer zu erfassen, beispielsweise in Abgrenzung zu einem Autofahrer. Der erfasste Verkehrsteilnehmer kann ein im Vergleich zum Kraftfahrzeug leichterer und/oder kleinerer Verkehrsteilnehmer sein. Der Zusammenstoß zwischen dem Verkehrsteilnehmer und dem Kraftfahrzeug kann asymmetrisch sein, beispielsweise hinsichtlich Masse, Geschwindigkeit und/oder Größe.

Die Steuerung kann dazu ausgebildet sein, aufgrund der Sensordaten den Verkehrsteilnehmer hinsichtlich Größe, Masse und/oder Transportmittel zu klassifizieren. Die Steuerung kann dazu ausgebildet sein, die Airbag-Anordnung zu den jeweiligen Zeitpunkten füllen, falls der Verkehrsteilnehmer aufgrund der Sensordaten einer vorbestimmten Klasse entspricht, beispielsweise falls der Verkehrsteilnehmer erkannt wird als eine Einzelperson, als Verkehrsteilnehmer außerhalb einer oder ohne eine Fahrzeugkabine, als ein Fußgänger, ein Rollstuhlfahrer und/oder ein Nutzer eines Einzelpersonen-Transportmittels, oder falls dem Verkehrsteilnehmer kein berädertes Transportmittel zuordenbar ist. Beispielsweise kann die Steuerung dazu ausgebildet sein, als den Verkehrsteilnehmer einen Motorradfahrer, einen Kraftradfahrer, einen Radfahrer, einen Pedelec-Fahrer, einen Skateboard-Fahrer, einen Tretrollerfahrer, einen "Hoverboard"-Fahrer und/oder einen "Segway"-Fahrer zu erfassen.

Der mindestens eine Sensor kann eine optische Kamera (beispielsweise eine Stereokamera) und/oder mindestens einen Radarsensor umfassen. Der mindestens eine Sensor und/oder die Steuerung können ein neuronales Netz umfassen, das zur Erkennung des Verkehrsteilnehmers aufgrund der Sensordaten trainiert ist.

Die Sensordaten können ferner ein Funksignal vom Verkehrsteilnehmer umfassen. Das Funksignal kann eine Kennung und/oder eine Klassifizierung des Verkehrsteilnehmers angeben.

Die Steuerung kann ferner dazu ausgebildet sein, (beispielsweise auf Grundlage der Sensordaten) eine Trajektorie des Verkehrsteilnehmers und/oder eine Trajektorie des Kraftfahrzeugs vorauszuberechnen. Die Steuerung kann ferner dazu ausgebildet sein, den ersten Zeitpunkt und/oder den zweiten Zeitpunkt aufgrund einer Annäherung oder eines Schnittpunkts der vorausberechneten Trajektorien zu bestimmen. Zielgröße einer Berechnung des ersten Zeitpunkts und/oder des zweiten Zeitpunkts kann ein minimaler Beschleunigungsverlauf des Verkehrsteilnehmers sein. Durch die Sensordaten gegebene Parameter der Berechnung können die Geschwindigkeiten des Verkehrsteilnehmers und die Geschwindigkeiten des Kraftfahrzeugs sein. Neben den ersten und zweiten Zeitpunkten zum Füllen (beispielsweise Aufblaszeitpunkten) kann eine Füllgeschwindigkeit (d. h. eine Füllrate), eine Füllmenge und/oder eine Fülldauer für den jeweiligen Abschnitt Ergebnis der Berechnung sein. Beispielsweise kann die Steuerung den Aufprallabschnitt bereits vor dem Aufschlagzeitpunkt vollständig gefüllt haben und die Füllmenge zum Zeitpunkt des Aufpralls reduzieren, um durch eine Bewegung des Aufprallabschnitts den Aufprall mit einem sanfteren Beschleunigungsverlauf abzufangen.

Die Steuerung kann ferner dazu ausgebildet ist, aufgrund der Sensordaten eine Vermeidbarkeit (beispielsweise ein Ausweichmanöver) oder eine Unausweichlichkeit des Zusammenstoßes zwischen dem Verkehrsteilnehmer und dem Kraftfahrzeug zu bewerten oder festzustellen. Die Bewertung oder Feststellung kann aufgrund der vorausberechneten Trajektorien, einem Bremsvermögen des Kraftfahrzeugs, einem Lenkvermögen des Kraftfahrzeugs und/oder einer Masse des Kraftfahrzeugs berechnet werden. Die Steuerung kann ferner dazu ausgebildet sein, den mindesten einen Aufprallabschnitt und den mindestens einen Rückhalteabschnitt zu füllen, falls (beispielsweise nur falls) eine Unausweichlichkeit des Zusammenstoßes festgestellt ist.

Ferner kann die Steuerung dazu ausgebildet sein, den Aufprallabschnitt und den Rückhalteabschnitt vor dem Zusammenstoß mit dem Verkehrsteilnehmer zu füllen, falls die Steuerung aufgrund der Sensordaten feststellt, dass der Verkehrsteilnehmer größer als der Zwischenraum ist. In diesem Fall kann der zweite Zeitpunkt mit dem ersten Zeitpunkt zusammenfallen. So kann beispielsweise die gesamte Airbag-Anordnung (einschließlich des Rückhalteabschnitts) zur Minderung des Aufschlags eines Motorrads oder Kleinwagens eingesetzt werden.

Die Steuerung kann ferner dazu ausgebildet sein, einen Fahreingriff zur Verminderung des Zusammenstoßes auszuführen. Der Fahreingriff kann eine Notbremsung, einen einseitigen Bremseingriff und/oder eine Lenkbewegung umfassen. Alternativ oder ergänzend kann die Steuerung dazu ausgebildet sein, ein Funksignal (beispielsweise ein Mobilfunksignal) für einen Notruf zu erzeugen oder zu bewirken.

Der Aufprallabschnitt und/oder der Rückhalteabschnitt können mehrere Teilbereiche umfassen, die vor dem jeweiligen Zeitpunkt in räumlich getrennten Bereichen des Frontbereichs des Kraftfahrzeugs untergebracht sind. Der Rückhalteabschnitt kann einen linken Teilbereich und einen rechten Teilbereich umfassen. Zum zweiten Zeitpunkt können sich der linke Teilbereich und der rechte Teilbereich ausgehend von gegenüberliegenden Seitenbereichen erstrecken und in Anlage kommen.

Das Nutzfahrzeug kann beispielsweise eine Sattelzugmaschine oder ein Lastkraftwagen zur Güterbeförderung, ein Bus zur Personenbeförderung oder ein Spezialfahrzeug (beispielsweise für den Einsatz an einem Flugfeld oder einer Baustelle) sein.

Gemäß einem weiteren Aspekt ist eine Airbag-Anordnung bereitgestellt. Die Airbag-Anordnung ist im Frontbereich eines Kraftfahrzeugs angeordnet oder anordenbar. Die Airbag-Anordnung umfasst mindestens einen Aufprallabschnitt, der dazu ausgebildet ist, Kräfte in Fahrtrichtung auf einen Verkehrsteilnehmer zu übertragen. Die Airbag-Anordnung umfasst ferner mindestens einen Rückhalteabschnitt, der dazu ausgebildet ist, Kräfte entgegen der Fahrtrichtung auf den Verkehrsteilnehmer zu übertragen. Die Airbag-Anordnung umfasst ferner eine Vorrichtung gemäß dem vorgenannten Aspekt und/oder eine Treiberschnittstelle, die mit der Vorrichtung in Signalaustausch steht oder bringbar ist.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein schematisches Blockschaltbild eines Ausführungsbeispiels einer Vorrichtung zur Verletzungsminderung eines Verkehrsteilnehmers;
- Figur 2: eine schematische Draufsicht eines ersten Ausführungsschemas einer Airbag-Anordnung, die in Signalaustausch mit einem Ausführungsbeispiel der Vorrichtung steht;
- Figur 3: eine schematische Draufsicht eines zweiten Ausführungsschemas einer Airbag-Anordnung, die in Signalaustausch mit einem Ausführungsbeispiel der Vorrichtung steht;
- Fig. 4A und 4B: eine schematische Seitenansicht eines ersten Ausführungsbeispiels eines Aufprallabschnitts der Airbag-Anordnung;
- Fig. 5A und 5B: eine schematische Seitenansicht eines ersten Ausführungsbeispiels eines Rückhalteabschnitts der Airbag-Anordnung;
- Fig. 6A und 6B: eine schematische Seitenansicht eines zweiten Ausführungsbeispiels eines Aufprallabschnitts der Airbag-Anordnung;
- Fig. 7A und 7B: eine schematische Seitenansicht eines zweiten Ausführungsbeispiels eines Rückhalteabschnitts der Airbag-Anordnung;
- Figur 8A: eine schematische Seitenansicht eines dritten Ausführungsbeispiels der Airbag-Anordnung;
- Figur 8B: eine schematische Aufsicht des dritten Ausführungsbeispiels der Airbag-Anordnung;
- Figur 8C: eine schematische Schnittansicht in einer fahrzeugmittigen Vertikalebene gemäß dem dritten Ausführungsbeispiel der Airbag-Anordnung;
- Figur 9: eine erste Ausgestaltung einer Anbindung zwischen Aufprallabschnitt und Rückhalteabschnitt; und
- Figur 10: eine zweite Ausgestaltung der Anbindung zwischen Aufprallabschnitt und Rückhalteabschnitt.

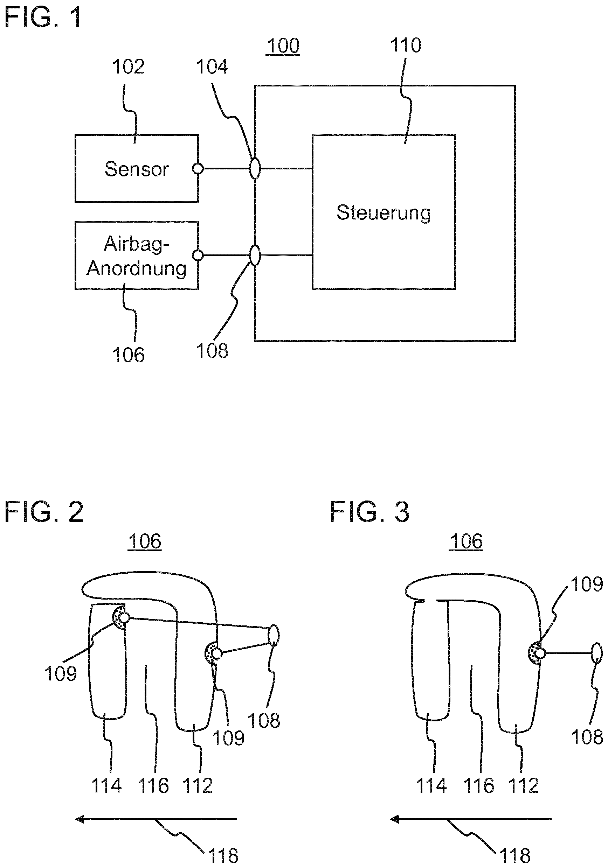

Figur 1 zeigt ein schematisches Blockschaltbild eines Ausführungsbeispiels einer Vorrichtung 100 zur Verletzungsminderung eines Verkehrsteilnehmers beim Zusammenstoß mit einem Kraftfahrzeug. Die Vorrichtung 100 umfasst einen oder mehrere Sensoren 102 und/oder eine Sensorschnittstelle 104 für Sensordaten zum Erfassen des Verkehrsteilnehmers im Fahrweg des Kraftfahrzeugs. Über eine Treiberschnittstelle 108 kann die Vorrichtung 100 eine Airbag-Anordnung 106 im Frontbereich des Kraftfahrzeugs füllen. Die Airbag-Anordnung 106 umfasst mindestens einem Aufprallabschnitt, der dazu ausgebildet ist, Kräfte in Fahrtrichtung auf den Verkehrsteilnehmer zu übertragen, und mindestens einen Rückhalteabschnitt, der dazu ausgebildet ist, Kräfte entgegen der Fahrtrichtung auf den Verkehrsteilnehmer zu übertragen. Die Vorrichtung 100 umfasst ferner eine mit der Treiberschnittstelle 108 verbundene Steuerung 110, die dazu ausgebildet ist, in Reaktion auf die Erfassung des Verkehrsteilnehmers den mindestens einen Aufprallabschnitt zu einem ersten Zeitpunkt zu füllen, und den mindestens einen Rückhalteabschnitt zu einem späteren zweiten Zeitpunkt zu füllen.

Figur 2 zeigt schematisch eine Aufsicht eines ersten Ausführungsschemas der Airbag-Anordnung 106. Die Airbag-Anordnung 106 umfasst den fahrzeugseitig angeordneten Aufprallabschnitt 112 und den in Fahrtrichtung 118 vom Aufprallabschnitt 112 beabstandeten Rückhalteabschnitt 114. Zumindest im gefüllten Zustand des Rückhalteabschnitts 114 ist zwischen dem Aufprallabschnitt 112 und dem Rückhalteabschnitt 114 ein Zwischenraum 116 zur Aufnahme des Verkehrsteilnehmers ausgebildet.

Im in Figur 2 schematisch dargestellten ersten Ausführungsschema sind zwei getrennte Gasgeneratoren 109 für den Aufprallabschnitt 112 bzw. den Rückhalteabschnitt 114 vorgesehen. Die Gasgeneratoren 109 sind jeweils mit der Treiberschnittstelle 108 und/oder der Steuerung 110 verbunden. Die Steuerung 110 betätigt den jeweiligen Gasgenerator zum ersten Zeitpunkt bzw. zum späteren zweiten Zeitpunkt.

Optional umfasst der Aufprallabschnitt 112 (wie in Figur 2 schematisch gezeigt) und/oder der Rückhalteabschnitt 114 einen Seitenabschnitt und/oder einen Bodenabschnitt. Der Seitenabschnitt kann zur Übertragung von Seitenführungskräften des im Zwischenraum 116 aufgenommenen Verkehrsteilnehmers ausgebildet sein. Der Bodenabschnitt kann den Zwischenraum 116 nach unten begrenzen. Der Bodenabschnitt kann den Zwischenraum 116 von der Fahrbahn und/oder vom Fahrgestell des Kraftfahrzeugs trennen.

Der Seitenabschnitt und/oder der Bodenabschnitt können Teil des Aufprallabschnitts 112 und/oder Rückhalteabschnitts 114 sein, beispielsweise indem die jeweiligen Abschnitte in Fluidverbindung stehen oder die jeweiligen Hüllen durchgehend sind.

Figur 3 zeigt schematisch eine Aufsicht eines zweiten Ausführungsschemas der Airbag-Anordnung 106. Merkmale, die mit jenen des ersten Ausführungsschemas der Figur 2 übereinstimmen oder austauschbar sind, sind jeweils mit gleichen Bezugszeichen versehen. Im in Figur 3 gezeigten zweiten Ausführungsschema umfasst der Aufprallabschnitt 112 mindestens einen Gasgenerator 109, der mit der Treiberschnittstelle 108 und/oder der Steuerung 110 verbunden ist. Der Rückhalteabschnitt 114 steht zumindest im gefüllten Zustand in Fluidverbindung mit dem Aufprallabschnitt 112. Die zeitliche Trennung zwischen dem ersten Zeitpunkt zum Füllen des Aufprallabschnitts 112 und dem späteren zweiten Zeitpunkt zum Füllen des Rückhalteabschnitts 114 kann dadurch bewirkt werden, dass der Gasgenerator mit dem Aufprallabschnitt 112 direkt in Fluidverbindung steht und mit dem Rückhalteabschnitt 114 nur indirekt über den Aufprallabschnitt 112 in Fluidverbindung steht.

Der Gasgenerator bewirkt durch Abgabe eines Gasvolumens, das dem Aufprallabschnitt 112 entspricht, zum ersten Zeitpunkt zunächst die Befüllung des Aufprallabschnitts 112. Erst nachdem der Aufprallabschnitt 112 sein durch die Hülle des Aufprallabschnitts 112 vorgegebenes Volumen erreicht hat, strömt über die Fluidverbindung vom Gasgenerator abgegebenes Treibgas in den Rückhalteabschnitt 114.

In einer ersten Implementierung aktiviert die Steuerung 110 den Gasgenerator 109 zum ersten Zeitpunkt, welcher über den zweiten Zeitpunkt hinaus kontinuierlich Treibgas abgibt, bis der Rückhalteabschnitt 114 vollständig gefüllt ist. In einer zweiten Implementierung betätigt die Steuerung 110 eine erste Stufe des Gasgenerators zum ersten Zeitpunkt, welche das Volumen des Aufprallabschnitts 112 füllt, und eine zweite Stufe des Gasgenerators zum zweiten Zeitpunkt, welche das Treibgasvolumen für den Rückhalteabschnitt 114 abgibt.

Der Rückhalteabschnitt 114 kann, wie in der Figur 3 gemäß dem zweiten Ausführungsschema gezeigt, über den Seitenabschnitt mit dem Aufprallabschnitt 112 in Fluidverbindung stehen. Alternativ oder ergänzend kann der Rückhalteabschnitt 114 über den Bodenabschnitt mit dem Aufprallabschnitt 112 in Fluidverbindung stehen.

Die Fluidverbindung zwischen dem Aufprallabschnitt 112 und dem Rückhalteabschnitt 114 gemäß dem zweiten Ausführungsschema kann in jeder Implementierung und jedem Ausführungsbeispiel eine Verjüngung des Durchflussquerschnitts (wie beispielsweise schematisch in Figur 3 gezeigt) und/oder eine Sollbruchstelle an der Fluidverbindung aufweisen. Dadurch kann erreichbar sein, dass der Aufprallabschnitt 112 zunächst vollständig gefüllt ist, bevor zum zweiten Zeitpunkt (beispielsweise beim Durchbrechen der Sollbruchstelle) der Rückhalteabschnitt 114 gefüllt wird.

Die in Bezug auf die Figuren 2 und 3 beschriebenen Ausführungsschemata sind auf jedes Ausführungsbeispiel anwendbar. Dabei können einzelne Merkmale zu den Fluidverbindungen und/oder Gasgeneratoren 109 umgesetzt werden, oder auch Merkmale der räumlichen Anordnung der Airbag-Abschnitte. Insbesondere kann die in den Figuren 2 oder 3 gezeigte Airbag-Anordnung 106 zu einer Ebene, die parallel zur Fahrtrichtung 118 ist (beispielsweise fahrzeugmittig), spiegelsymmetrisch ergänzt oder spiegelsymmetrisch fortgesetzt sein.

In jedem hierin beschriebenen Ausführungsbeispiel kann die Steuerung 110 dazu ausgebildet sein, die Airbag-Anordnung 106 als ein mehrstufiges Airbag-System zu betätigen. Der Aufprallabschnitt 112 kann auch als Aufprall-Airbag und der Rückhalteabschnitt 114 als Fang-Airbag bezeichnet werden. Im Falle einer Kollision des Verkehrsteilnehmers, insbesondere eines schwächeren Unfallgegners, mit dem Kraftfahrzeug, wird der Aufprall des Verkehrsteilnehmers durch den Aufprallabschnitt 112 reduziert. Durch das zeitverzögerte Füllen des Rückhalteabschnitts 114 wird der Verkehrsteilnehmer festgehalten, beispielsweise im Zwischenraum 116 von den Abschnitten 112 und 114 umschlossen. Dadurch kann der Verkehrsteilnehmer davor geschützt werden, zurückgeschleudert zu werden, seitlich weggeschleudert zu werden oder unter das Kraftfahrzeug zu geraten. Der Verkehrsteilnehmer wird kurzzeitig im Zwischenraum 116, der auch als Überlebensraum bezeichnet wird, eingeschlossen, bis die Bewegung des Kraftfahrzeugs und damit die Gefahrensituation beendet ist.

Das Auslösen der Airbag-Anordnung 106, insbesondere der erste Zeitpunkt und/oder der zweite Zeitpunkt, wird abhängig vom Bewegungszustand des Kraftfahrzeugs und des Verkehrsteilnehmers, beispielsweise durch die Steuerung 110, geregelt.

Die Steuerung 110 berechnet eine Trajektorie des Kraftfahrzeugs voraus. Die Vorausberechnung der Trajektorie des Kraftfahrzeugs kann auf der Fahrgeschwindigkeit (beispielsweise erfasst von Drehzahlsensoren an den Rädern des Kraftfahrzeugs), einem Lenkwinkel des Kraftfahrzeugs und/oder einer Verzögerung des Kraftfahrzeugs durch Bremseingriff basieren. Insbesondere kann die Steuerung 110 (beispielsweise aufgrund des Lenkwinkels und der Verzögerung) bei der Vorausberechnung Maßnahmen zur Kollisionsvermeidung einleiten und/oder berücksichtigen. Solche Maßnahmen umfassen beispielsweise die Funktion eines Notbremsassistenten, welcher mit den englischen Begriffen "Advanced Emergency Braking Systems" (AEBS) oder "Autonomous Emergency Braking" (AEB) bezeichnet werden kann.

Die Steuerung 110 berechnet ferner auf Grundlage der Sensordaten eine Trajektorie des Verkehrsteilnehmers voraus. Hierzu kann der mindestens eine Sensor 102 bestehende Sensoren des Notbremsassistenten umfassen, die beispielsweise auf Radar oder Lidar (Abkürzung für englisch "Light detection and ranging") beruhen. Alternativ oder ergänzend kann der mindestens eine Sensor 102 eine Stereokamera an der Fahrzeugfront umfassen.

Aus den vorausberechneten Trajektorien des Kraftfahrzeugs und des Verkehrsteilnehmers kann ein Kollisionszeitpunkt vorausberechnet werden. Beispielsweise kann der Kollisionszeitpunkt aus einem Schnittpunkt der vorausberechneten Trajektorien durch die Steuerung 110 bestimmt werden. Der erste Zeitpunkt kann eine vorbestimmte Zeitdifferenz vor dem vorausberechneten Kollisionszeitpunkt liegen. Die Zeitdifferenz kann ein Auslösen des Gasgenerators und ein vollständiges Befüllen des Aufprallabschnitts 112 berücksichtigen.

In einer ersten (mit jeder Implementierung und jedem Ausführungsbeispiel kombinierbaren) Variante ist der zweite Zeitpunkt eine feste Verzögerungsdauer nach dem ersten Zeitpunkt. Die Verzögerungsdauer kann von einem experimentell oder durch Modellrechnungen bestimmten Einsinken des Verkehrsteilnehmers bei einem vorbestimmten Geschwindigkeitsbereich abhängen. In einer zweiten Variante berechnet die Steuerung 110 das Einsinken (beispielsweise Einsinktiefe und/oder Einsinkdauer) des Verkehrsteilnehmers in den Aufprallabschnitt 112, z. B. aufgrund einer Relativgeschwindigkeit zwischen Verkehrsteilnehmer und Kraftfahrzeug und/oder den beiden vorausberechneten Trajektorien. Beispielsweise wird der zweite Zeitpunkt zum Füllung des Rückhalteabschnitts 114 so bestimmt, dass der Rückhalteabschnitt 114 vollständig gefüllt ist, wenn der Verkehrsteilnehmer maximal in den Aufprallabschnitt 112 eingesunken ist. Optional passt die Steuerung einen Füllgrad des Aufprallabschnitts an Masse und/oder Relativgeschwindigkeit des Verkehrsteilnehmers an. In einer dritten (mit der zweiten kombinierbaren) Variante bestimmt ein Anpressdruck des Verkehrsteilnehmers auf den Aufprallabschnitt 112 den zweiten Zeitpunkt.

Wenngleich in Bezug auf die Figuren 2 und 3 jeweils ein Aufprallabschnitt 112 und Rückhalteabschnitt 114 dargestellt sind, kann die Airbag-Anordnung eine einteilige oder mehrteilige Ausführung des Aufprallabschnitts 112 und/oder des Rückhalteabschnitts 114 umfassen. Beispielsweise ist eine mehrteilige Ausführung je nach Bauraumsituation an der Frontpartie des Kraftfahrzeugs vorteilhaft. So kann der Aufprallabschnitt beispielsweise zweiteilig ausgeführt werden und im linken bzw. rechten Randbereich der Fahrzeugfront untergebracht sein. Beispielsweise kann eine solche zweiteilige Ausführung im gefüllten Zustand die gesamte Breite des Kraftfahrzeugs abdecken. Dies ist insbesondere bei Fahrzeugen mit einer großen Spurweite und Nutzfahrzeugen von Vorteil. Alternativ kann die Airbag-Anordnung 106 mittig an der Front des Kraftfahrzeugs angeordnet sein, beispielsweise bei einem Kleinwagen oder einem Motorrad.

Der Seitenabschnitt der Airbag-Anordnung 106 ist dazu ausgebildet, auch schräg eintreffende Verkehrsteilnehmer zu schützen. Optional betätigt die Steuerung 110 den den Seitenabschnitt umfassenden Aufprallabschnitt 112, um zu verhindern, dass ein seitlich auf das Kraftfahrzeug treffender Verkehrsteilnehmer oder ein (beispielsweise die Fahrbahn des Kraftfahrzeugs) querender Verkehrsteilnehmer überhaupt in den Frontbereich des Kraftfahrzeugs gerät.

Die Airbag-Anordnung 106, insbesondere der Aufprallabschnitt 112, kann eine bezüglich der Horizontalen asymmetrische Form aufweisen. Der Bodenabschnitt kann als Fangnase am unteren Ende des Aufprallabschnitts 112 (vorzugsweise über die gesamte Breite des Kraftfahrzeugs) ausgebildet sein. Die Fangnase kann dazu ausgebildet sein, den Verkehrsteilnehmer vom Boden weg zu heben und/oder eine räumliche Trennung zwischen dem Zwischenraum 116 und dem Fahrzeuguntergrund sicherzustellen.

In allen Implementierungen und Ausführungsbeispielen kann die Airbag-Anordnung 106 durch die Steuerung 110 zeitverzögert ausgelöst werden. Beispielsweise bestimmt die Steuerung 110 den ersten Zeitpunkt und/oder den zweiten Zeitpunkt, so dass der auf den Verkehrsteilnehmer wirkende Beschleunigungsverlauf (beispielsweise vorausberechnet aufgrund der vorausberechneten Trajektorien und der Wechselwirkung mit der Airbag-Anordnung 106) gemäß einer Modellrechnung minimiert ist. So kann das Auslösen des Aufprallabschnitts 112 zum ersten Zeitpunkt die Aufprallfolgen mildern und den Verkehrsteilnehmer in den Zwischenraum 116 aufnehmen. Das Auslösen des Rückhalteabschnitts 114 zum zweiten Zeitpunkt kann den Verkehrsteilnehmer sicher im Zwischenraum 116 festhalten, beispielsweise um ein Zurückschleudern zu verhindern.

Die Steuerung oder Regelung des Auslösens der Airbag-Anordnung 106 (beispielsweise hinsichtlich Füllgrad, Füllrate, erstem Zeitpunkt und/oder zweitem Zeitpunkt) durch die Steuerung 110 wird in Abhängigkeit von der Fahrgeschwindigkeit des Kraftfahrzeugs, der Position des Verkehrsteilnehmers relativ zum Kraftfahrzeug und der Bewegung des Verkehrsteilnehmers relativ zum Kraftfahrzeug vorausberechnet. Hierbei dient als Eingangssensorik der mindestens eine Sensor 102 bzw. dessen Sensorschnittstelle 104 für die Sensordaten. Der mindestens eine Sensor 102 umfasst vorzugsweise Sensorik, die bereits aufgrund einer Fahrdynamikregelung oder eines Fahrerassistenzsystems des Kraftfahrzeugs vorhanden ist, beispielsweise eine Kamera und Sensoren für Fahrgeschwindigkeit und Lenkwinkel.

Eine Zielgröße bei der Steuerung oder Regelung des Auslösens der Airbag-Anordnung 106 kann eine sichere Umklammerung des Verkehrsteilnehmers durch die Abschnitte 112 und 114 und/oder eine Minimierung der Beschleunigungen des Verkehrsteilnehmers betreffen. Die mindestens eine Zielgröße kann durch Sensoren (beispielsweise im Aufprallabschnitt 112) gemessen oder modellbasiert berechnet werden. Die Berechnung kann als Vorausberechnung (beispielsweise zur Steuerung auf Grundlage von vor der Kollision erfasster Sensordaten) und/oder als Echtzeit-Berechnung (beispielsweise zur Regelung während des ersten und/oder zweiten Zeitpunkts) ausgeführt sein.

Die Steuerung 110 ist ferner dazu ausgebildet, den gefüllten Zustand (zumindest des Rückhalteabschnitts 114) der Airbag-Anordnung 106 bis zum Stillstand des Kraftfahrzeugs aufrechtzuerhalten. Hierzu kann die Airbag-Anordnung 106 (beispielsweise in Abweichung von einer herkömmlichen Airbag-Anordnung für den Innenraum eines Kraftfahrzeugs) mittels des Gasgenerators oder eines zusätzlichen Gasgenerators (beispielsweise eines Kaltgasgenerators) über einen Zeitpunkt von mehreren Sekunden nachgefüllt werden, um an Auslassöffnungen der Airbag-Anordnung 106 ausströmendes Gas nachzufüllen. Alternativ ist die Airbag-Anordnung 106 zum ersten Zeitpunkt bzw. zum zweiten Zeitpunkt fluiddicht geschlossen, und die Steuerung 110 bewirkt über die Schnittstelle 108 das Öffnen von Auslassöffnungen in der Airbag-Anordnung 106 beim Stillstand des Kraftfahrzeugs.

In jedem Ausführungsbeispiel kann das Auslösen eines Notbremsassistenten und/oder das Füllen der Airbag-Anordnung 106 mit einem Notruf verknüpft sein. Der Notruf kann über ein im Kraftfahrzeug angeordnetes Fahrzeugnotrufmodul (beispielsweise ein Mobilfunkmodul) gesendet werden.

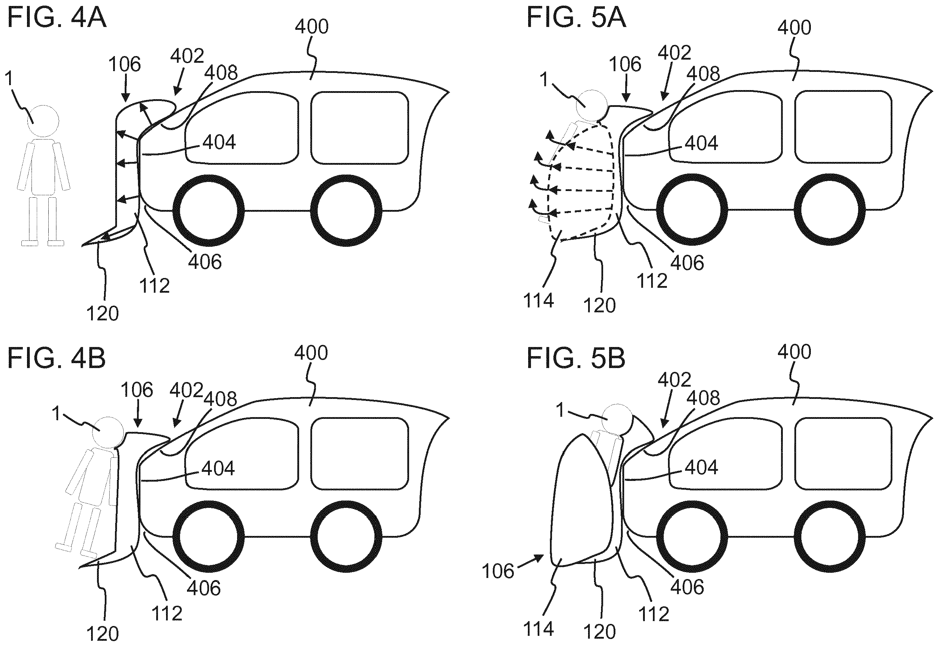

Figur 4A zeigt eine schematische Seitenansicht des Kraftfahrzeugs 400 und des Verkehrsteilnehmers 1 beim oder unmittelbar nach dem ersten Zeitpunkt. Im in Figur 4A gezeigten ersten Ausführungsbeispiel der Airbag-Anordnung 106 ist der Aufprallabschnitt 112 im Frontbereich des Kraftfahrzeugs 400, beispielsweise eines Personenkraftwagens, angeordnet. De Aufprallabschnitt 112 überdeckt im gefüllten Zustand eine Frontschürze 404, einschließlich eines gegebenenfalls vorhandenen Kühlergrills, und optional eine Fronthaube 408. Die Fronthaube 408 kann bei einem mittels Verbrennungsmotor angetriebenen Kraftfahrzeug 400 eine Motorhaube sein oder im Fall eines elektrisch angetriebenen Kraftfahrzeugs 400 einen Frontkofferraum abdecken.

Der Aufprallabschnitt 112 umfasst an seinem unteren Ende ferner einen Bodenabschnitt 120. Bodenabschnitt 120 trennt den Raum vor dem Aufprallabschnitt 112 von einem Frontboden 406 (beispielsweise einem Unterfahrschutz und dem Fahrgestell des Kraftfahrzeugs 400). Der Bodenabschnitt 120 umfasst einen in die Fahrtrichtung gekrümmten Abschnitt des Aufprallabschnitts 112.

Figur 4B zeigt das erste Ausführungsbeispiel der Figur 4A zu einem späteren Zeitpunkt zwischen dem ersten und dem zweiten Zeitpunkt. Der Aufprallabschnitt 112 der Airbag-Anordnung 106 überträgt zum in Figur 4B gezeigten Zeitpunkt Kräfte in der Fahrtrichtung des Kraftfahrzeugs 400 auf den Verkehrsteilnehmer 1.

Figur 5A zeigt das erste Ausführungsbeispiel der Airbag-Anordnung 106 zum oder unmittelbar nach dem zweiten Zeitpunkt. Während der Verkehrsteilnehmer 1 den Aufprallabschnitt 112 berührt, beispielsweise bei einer maximalen Eindringtiefe des Verkehrsteilnehmers 1 in den Aufprallabschnitt 112, betätigt die Steuerung 110 den Rückhalteabschnitt 114. Im in Figur 5A gezeigten Ausführungsbeispiel ist der Rückhalteabschnitt 114 seitlich am Aufprallabschnitt 112 angeordnet und entfaltet sich in einer ersten Phase in der Fahrtrichtung am Verkehrsteilnehmer 1 vorbei, und in einer zweiten Phase von der Seite zur Fahrzeugmittellinie vor dem Verkehrsteilnehmer 1. Dadurch wird der Verkehrsteilnehmer 1 in einem Zwischenraum zwischen dem Rückhalteabschnitt 114 und dem Aufprallabschnitt 112 eingeschlossen. Der Einschluss kann (beispielsweise abweichend von der schematischen Darstellung der Figuren) den Kopf des Verkehrsteilnehmers 1 einschließen. Hierzu kann ein separater Abschnitt für den Kopf oder ein entsprechend hoher Rückhalteabschnitt 112 vorgesehen sein. So können beispielsweise Schleudertraumata verhindert werden.

Figur 5B zeigt die Airbag-Anordnung 106 im gefüllten Zustand nach dem zweiten Zeitpunkt. Sowohl der Aufprallabschnitt 112 als auch der Rückhalteabschnitt 114 werden nach dem zweiten Zeitpunkt bis zum Stillstand des Kraftfahrzeugs 400 im gefüllten Zustand gehalten.

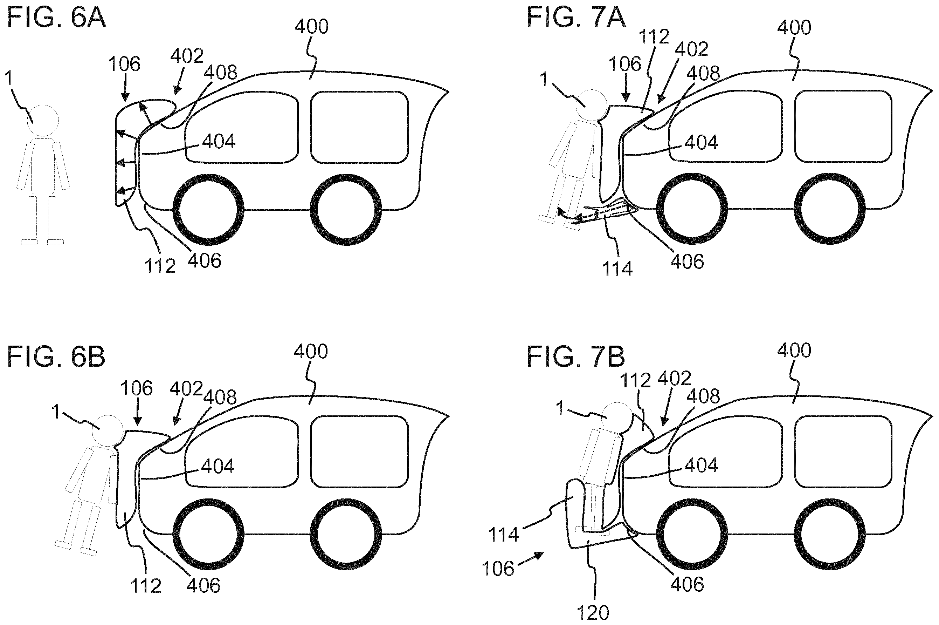

Die Figuren 6A und 6B sowie die Figuren 7A und 7B zeigen in einer schematischen Seitenansicht ein zweites Ausführungsbeispiel der Airbag-Anordnung 106 zum ersten bzw. zweiten Zeitpunkt. Merkmale, die mit denen des ersten Ausführungsbeispiels übereinstimmen, sind mit gleichen Bezugszeichen versehen.

Sowohl der Aufprallabschnitt 112 als auch der Rückhalteabschnitt 114 sind direkt im Frontbereich 402 am Kraftfahrzeug 400 angebunden. Beispielsweise ist der Aufprallabschnitt 112 in einem zusammengefalteten Zustand an der Frontschürze 404 angeordnet, und der Rückhalteabschnitt 114 ist an einem unteren Ende der Frontschürze 404 oder am Frontboden 406 angeordnet. Dadurch bildet der Rückhalteabschnitt 114 einen in Figur 7B schematisch gezeigten Bodenabschnitt 120 aus, der sich in der Fahrtrichtung erstreckt und einen Zwischenraum zwischen dem Rückhalteabschnitt 114 und dem Aufprallabschnitt 112 zur Fahrbahn hin abschließt.

Beispielsweise erstreckt sich in einer ersten Phase nach dem zweiten Zeitpunkt der Rückhalteabschnitt 114 entlang der Fahrtrichtung, wie in Figur 7A schematisch gezeigt. In einer späteren zweiten Phase entfaltet sich der Rückhalteabschnitt 114 ausgehend vom Bodenabschnitt 120 nach oben, wie schematisch in Figur 7B gezeigt.

In weiteren Varianten der Airbag-Anordnung 106 sind einzelne Merkmale der vorgenannten Ausführungsbeispiele kombinierbar. Beispielsweise kann der in den Figuren 7A und 7B schematisch gezeigte Rückhalteabschnitt 114 zur Seitenführung des Verkehrsteilnehmers 1 um einen Seitenabschnitt ergänzt sein. Der Seitenabschnitt kann wie im ersten Ausführungsbeispiel der Figuren 5A und 5B schematisch gezeigt am Aufprallabschnitt 112 seitlich angebunden sein und sich vom Aufprallabschnitt 112 in der Fahrtrichtung nach vorne erstrecken. Alternativ oder ergänzend kann ein Seitenabschnitt am Rückhalteabschnitt 114 angeordnet sein.

Jeder der Abschnitte, insbesondere der Aufprallabschnitt 112 und der Rückhalteabschnitt 114, können vor dem ersten bzw. zweiten Zeitpunkt in einem zusammengefalteten Zustand vorliegen. Das Füllen bewirkt ein Entfalten des jeweiligen Abschnitts. Bei jedem hierin genannten Ausführungsbeispiel kann im zusammengefalteten Zustand die Hülle des jeweiligen Abschnitts entsprechend einer Ziehharmonika zusammengefaltet sein. Alternativ oder ergänzend kann der jeweilige Abschnitt nach innen gefaltet sein, so dass Teile der Innenseite der Hülle sich berühren. Letztere Faltanordnung kann für im befüllten Zustand auskragende Abschnitte, insbesondere den Bodenabschnitt 120, einen Seitenabschnitt und/oder den Rückhalteabschnitt 114 für eine schnelle Entfaltung vorteilhaft sein.

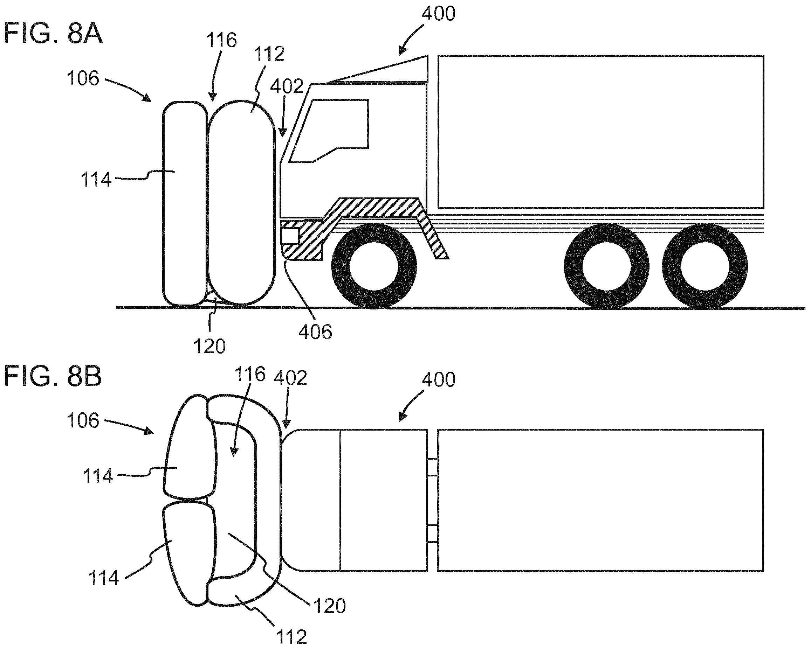

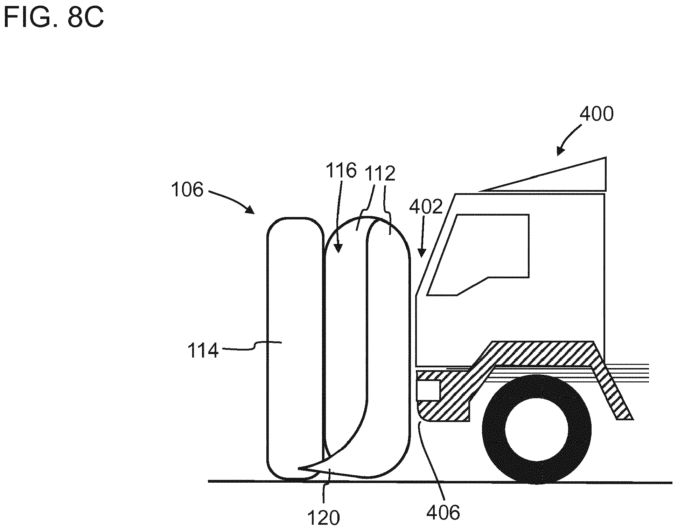

Die Figuren 8A bis 8C zeigen schematisch ein drittes Ausführungsbeispiel der Airbag-Anordnung 106. Genauer zeigen die Figuren 8A, 8B und 8C eine Seitenansicht, eine Aufsicht bzw. eine fahrzeugmittige Schnittansicht der Airbag-Anordnung 106 für ein Nutzfahrzeug.

Aufgrund der Höhe der Fahrzeugfront und/oder der Höhe des Fahrgestells ist bei einem Nutzfahrzeug als Kraftfahrzeug 400 die vorübergehende Fixierung eines Verkehrsteilnehmers im Frontbereich 402 des Kraftfahrzeugs 400 von besonderer Bedeutung für die Sicherheit des Verkehrsteilnehmers. Da der Frontbereich 402 bei einem Nutzfahrzeug 400 (oftmals einschließlich der Windschutzscheibe) im Wesentlichen vertikal ist, ist erst durch die Kombination des Aufprallabschnitts 112 mit dem Rückhalteabschnitt 114 ein Einklemmen (beispielsweise unter einem Stoßfänger oder unter dem Frontboden 406) oder Überfahren des Verkehrsteilnehmers verhinderbar.

Zudem sieht die EU Richtlinie 2015/719 zur Änderung der Richtlinie 96/53/EG, welche die Abmessungen von Nutzfahrzeugen regelt, im Zusammenhang mit bestimmten Strukturen an der Außenhaut des Nutzfahrzeugs größere Fahrzeuglängen vor. Beispielsweise soll es möglich sein, für aerodynamische Verbesserungen der Fahrzeuge die zuvor gültigen Fahrzeuglängen zu überschreiten. Damit können auch Strukturen zur Reduzierung der Unfallschwere vorgesehen werden, beispielsweise gemäß Grund (5) in der Richtlinie 2015/719. Damit ist eine Integration der Airbag-Anordnung 106 nicht nur in bisherige Fahrerhäuser möglich. Auch sind mit den geänderten Fahrerhausgeometrien weitere oder vereinfachte Ausführungsbeispiele des Einbaus der Airbag-Anordnung 106 möglich.

Im dritten Ausführungsbeispiel ist der Aufprallabschnitt 112 im gefüllten Zustand parallel zum Frontbereich 402, vorzugsweise über die gesamte Breite des Kraftfahrzeugs 400. An den Seiten erstreckt sich der Aufprallabschnitt 112 als Seitenabschnitte über die Breite des Kraftfahrzeugs hinaus und ist in Fahrtrichtung nach vorne gekrümmt. Der durch den konkaven Aufprallabschnitt 112 gebildete Zwischenraum 116 ist nach dem zweiten Zeitpunkt durch den Rückhalteabschnitt 114 in Fahrtrichtung geschlossen.

Am unteren Ende des Aufprallabschnitts 112 kragt der Bodenabschnitt 120 in Fahrtrichtung aus. Indem sowohl der Bodenabschnitt 120 als auch die Seitenabschnitte durch den Aufprallabschnitt 112 ausgebildet sind, ist der Zwischenraum 116 vom Aufprallabschnitt 112 an vier Seiten umgeben, welche dem Aufprallabschnitt 112 besondere Formstabilität verleihen.

Während das dritte Ausführungsbeispiel der Airbag-Anordnung 106 für ein Nutzfahrzeug beschrieben ist, kann eine solche Airbag-Anordnung 106 bei jedem Kraftfahrzeug 400, insbesondere solchen mit (zumindest im Wesentlichen) vertikalem Frontbereich 402, eingesetzt werden.

Ferner kann jedes Ausführungsbeispiel der Airbag-Anordnung 106 auch an einer Seite des Kraftfahrzeugs 400 angeordnet sein. Die Steuerung 110 kann in Bezug auf die seitlich angeordnete Airbag-Anordnung 106 zur Erfassung eines querenden Verkehrsteilnehmers ausgebildet sein. Dadurch kann ein Verkehrsteilnehmer 1 des Querverkehrs (beispielsweise ein die Fahrbahn betretender Fußgänger) geschützt werden. Beispielsweise kann die Airbag-Anordnung 106 seitlich vor den Radkästen und/oder vor einem unterfahrbaren Freiraum zwischen den Radachsen angeordnet sein.

In jedem Ausführungsbeispiel kann die Airbag-Anordnung 106, insbesondere deren Aufprallabschnitt 112 und/oder Rückhalteabschnitt 114, jeweils einteilig oder mehrteilig ausgeführt sein. Insbesondere eine einteilige Ausführung kann eine durchgehende Schutzfläche für den Verkehrsteilnehmer 1 ermöglichen.

Die mehrteilige Ausführung kann abhängig von der Breite des Kraftfahrzeugs eingesetzt werden. Die mehrteilige Ausführung kann durch Trennwände oder einen verringerten Abstand zwischen den Trennwänden die Formstabilität der gefüllten Airbag-Anordnung verbessern. Alternativ oder ergänzend kann die mehrteilige Ausführung mehrere Gasgeneratoren (beispielsweise mindestens einen Gasgenerator je Teilbereich) umfassen, für eine besonders kurze Entfaltungsdauer des Abschnitts.

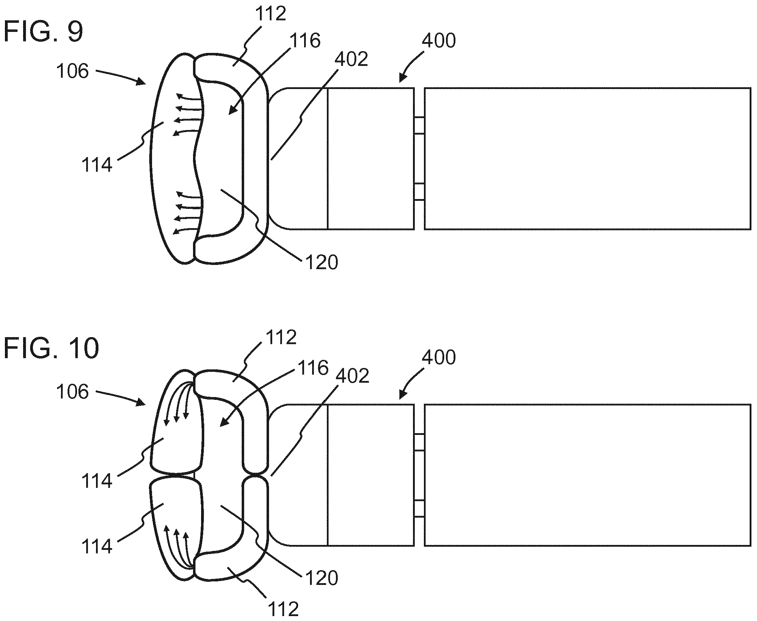

Fig. 9 zeigt (ohne darauf beschränkt zu sein) anhand des dritten Ausführungsbeispiels eine einteilige Ausführung sowohl des Aufprallabschnitts 112 als auch des Rückhalteabschnitts 114. Der Rückhalteabschnitt 114 kann sich ab dem zweiten Zeitpunkt ausgehend von der Vorderkante des Bodenabschnitts 120 entfalten. Alternativ oder ergänzend kann das Treibgas zur Füllung des Rückhalteabschnitts 114 von beiden Seitenabschnitten des Aufprallabschnitts 112 in den Rückhalteabschnitt 114 strömen.

Fig. 10 zeigt (ohne darauf beschränkt zu sein) anhand des dritten Ausführungsbeispiels eine zweiteilige Ausführung sowohl des Aufprallabschnitts 112 als auch des Rückhalteabschnitts 114. Jeder Teilbereich des Rückhalteabschnitts 114 ist über die gesamte Höhe des Rückhalteabschnitts 114 mit dem jeweiligen Seitenabschnitt am Aufprallabschnitt 112 zugfest verbunden. Der Rückhalteabschnitt 114 ist auf jeder Höhe an wenigstens zwei Stellen mit dem jeweiligen Seitenabschnitt verbunden. Dadurch erhält der Rückhalteabschnitt 114 eine steife Querausrichtung von den Seitenabschnitten zur Fahrzeugmittellinie. Ferner kann der Rückhalteabschnitt 114, auch ohne mechanische Anbindung am Bodenabschnitt 120, Kräfte entgegen der Fahrtrichtung auf den Verkehrsteilnehmer 1 übertragen.

Bei jedem Ausführungsbeispiel kann gemäß dem in Figur 2 gezeigten ersten Ausführungsschema ein oder jeder Abschnitt (und gegebenenfalls jeder Teilbereich des jeweiligen Abschnitts) jeweils einen Gasgenerator umfassen, der über die Treiberschnittstelle 108 in Signalaustausch mit der Vorrichtung 100 steht. Alternativ oder ergänzend kann bei jedem Ausführungsbeispiel gemäß dem in Figur 3 gezeigten zweiten Ausführungsschema der Rückhalteabschnitt 114 (und gegebenenfalls ein oder jeder Teilbereich des Rückhalteabschnitts 114) mit dem Aufprallabschnitt 112 über eine Vielzahl an Durchlassöffnungen in Fluidverbindung stehen.

Beispielsweise ermöglichen über die gesamte Höhe des Rückhalteabschnitts 114 verteilt angeordnete Durchlassöffnungen das Strömen von Treibgas vom Aufprallabschnitt 112 in den Rückhalteabschnitt 114 zum zweiten Zeitpunkt. Figur 10 zeigt schematisch eine solche Strömung durch gebogene Pfeile. Alternativ oder zusätzlich sind Durchlassöffnungen zwischen dem Bodenabschnitt 120 und dem Rückhalteabschnitt 114 über die gesamte Breite des Rückhalteabschnitts 114 angeordnet, die das Strömen von Treibgas vom Aufprallabschnitt 112 in den Rückhalteabschnitt 114 ermöglichen. Figur 9 zeigt schematisch eine solche Strömung durch gebogene Pfeile.

Dem Fachmann sind anhand vorstehender Ausführungsbeispiele technische Wirkungen und Vorteile ersichtlich. Indem nicht nur ein Aufschlag des Verkehrsteilnehmers am Kraftfahrzeug durch die Kräfte des Aufprallabschnitts in Fahrtrichtung abgemildert wird, sondern der zeitversetzt gefüllte Rückhalteabschnitt durch die Kräfte entgegen der Fahrtrichtung einen Rückprall oder ein Abgleiten des Verkehrsteilnehmers auf die Straße nach dem Aufschlag am Kraftfahrzeug verhindert, ist der Verkehrsteilnehmer vor einem wesentlichen zweiten Gefährdungsvorgang geschützt.

Obwohl die Erfindung in Bezug auf exemplarische Ausführungsbeispiele beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Situation oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 1: Verkehrsteilnehmer
- 100: Vorrichtung zur Verletzungsminderung
- 102: Sensor
- 104: Sensorschnittstelle
- 106: Airbag-Anordnung
- 108: Treiberschnittstelle
- 109: Gasgenerator
- 110: Steuerung
- 112: Aufprallabschnitt
- 114: Rückhalteabschnitt
- 116: Zwischenraum
- 118: Fahrtrichtung
- 120: Bodenabschnitt
- 400: Kraftfahrzeug
- 402: Frontbereich
- 404: Frontschürze, insbesondere Kühlergrill
- 406: Frontboden
- 408: Fronthaube, insbesondere Motorhaube und Frontkofferraumhaube

## Patentansprüche

1. Vorrichtung (100) zur Verletzungsminderung eines Verkehrsteilnehmers (1) beim Zusammenstoß mit einem Kraftfahrzeug (400), umfassend:
mindestens einen Sensor (102) oder eine Sensorschnittstelle (104) für Sensordaten zum Erfassen eines Verkehrsteilnehmers (1) im Fahrweg des Kraftfahrzeugs (400);
eine Treiberschnittstelle (108) zum Füllen einer Airbag-Anordnung (106) im Frontbereich (402) des Kraftfahrzeugs (400), wobei die Airbag-Anordnung (106) mindestens einen Aufprallabschnitt (112) umfasst, der dazu ausgebildet ist, Kräfte in Fahrtrichtung (118) auf den Verkehrsteilnehmer zu übertragen, und mindestens einen Rückhalteabschnitt (114) umfasst, der dazu ausgebildet ist, Kräfte entgegen der Fahrtrichtung (118) auf den Verkehrsteilnehmer zu übertragen; und
eine mit der Treiberschnittstelle (108) verbundene Steuerung (110), die dazu ausgebildet ist, in Reaktion auf die Erfassung des Verkehrsteilnehmers (1) den mindestens einen Aufprallabschnitt (112) zu einem ersten Zeitpunkt zu füllen, und den mindestens einen Rückhalteabschnitt (114) zu einem späteren zweiten Zeitpunkt zu füllen,
**dadurch gekennzeichnet, dass**
die Steuerung (110) ferner dazu ausgebildet ist, auf Grundlage der Sensordaten eine Trajektorie des Verkehrsteilnehmers (1) und eine Trajektorie des Kraftfahrzeugs (400) vorauszuberechnen, und den zweiten Zeitpunkt aufgrund eines Schnitts der vorausberechneten Trajektorien zu bestimmen.

2. Vorrichtung nach Anspruch 1, wobei die Airbag-Anordnung (106) nach dem zweiten Zeitpunkt zwischen dem mindestens einen Aufprallabschnitt (112) und dem mindestens einen Rückhalteabschnitt (114) einen Zwischenraum (116) zur Aufnahme des Verkehrsteilnehmers (1) ausbildet.

3. Vorrichtung nach Anspruch 2, wobei der mindestens eine Rückhalteabschnitt (114) den Zwischenraum (116) in Fahrtrichtung (118) begrenzt, und/oder wobei der mindestens eine Aufprallabschnitt (112) den Zwischenraum (116) zum Kraftfahrzeug (400) begrenzt.

4. Vorrichtung nach einem der Ansprüche 1 bis 3, wobei die Vorrichtung (100) dazu ausgebildet ist, den mindestens einen Aufprallabschnitt (112) und/oder den mindestens einen Rückhalteabschnitt (114) bis zum Stillstand des Kraftfahrzeugs (400) gefüllt zu halten.

5. Vorrichtung nach einem der Ansprüche 1 bis 4, wobei im oder am mindestens einen Aufprallabschnitt (112) und/oder mindestens einen Rückhalteabschnitt (114) jeweils mindestens ein Gasgenerator zum Füllen des entsprechenden Abschnitts angeordnet ist, der über die Treiberschnittstelle (108) mit der Steuerung (110) betätigbar ist.

6. Vorrichtung nach einem der Ansprüche 1 bis 5, wobei mindestens einer der Rückhalteabschnitte (114) mit mindestens einem der Aufprallabschnitte (112) in Fluidverbindung steht.

7. Vorrichtung nach einem der Ansprüche 1 bis 6, wobei die gefüllte Airbag-Anordnung (106) mindestens einen Seitenabschnitt umfasst, der den Zwischenraum (116) quer zur Fahrtrichtung (118) begrenzt.

8. Vorrichtung nach einem der Ansprüche 1 bis 7, wobei die gefüllte Airbag-Anordnung (106) mindestens einen Bodenabschnitt (120) umfasst, der den Zwischenraum (116) zur Fahrbahn hin abschließt und/oder von einem Fahrwerk des Kraftfahrzeugs (400) räumlich trennt.

9. Vorrichtung nach Anspruch 7 oder 8, wobei der Bodenabschnitt (120) und/oder mindestens einer der Seitenabschnitte jeweils in Fluidverbindung mit dem Aufprallabschnitt (112) oder dem Rückhalteabschnitt (114) stehen.

10. Vorrichtung nach einem der Ansprüche 1 bis 9, wobei die gefüllte Airbag-Anordnung (106) ferner dazu ausgebildet ist, Kräfte in vertikaler Richtung zu übertragen.

11. Vorrichtung nach einem der Ansprüche 1 bis 10, wobei die Steuerung (110) dazu ausgebildet ist, aufgrund der Sensordaten einen kabinenlosen Verkehrsteilnehmer (1) zu erfassen.

12. Vorrichtung nach einem der Ansprüche 1 bis 11, wobei die Steuerung (110) ferner dazu ausgebildet ist, den ersten Zeitpunkt aufgrund des Schnitts der vorausberechneten Trajektorien zu bestimmen.

13. Vorrichtung nach einem der Ansprüche 1 bis 12, wobei der Aufprallabschnitt (112) und/oder der Rückhalteabschnitt (114) mehrere Teilbereiche umfassen, die vor dem jeweiligen Zeitpunkt in räumlich getrennten Bereichen des Frontbereichs (402) des Kraftfahrzeugs (400) untergebracht sind.

14. Vorrichtung nach einem der Ansprüche 1 bis 13, wobei der Rückhalteabschnitt (114) einen linken Teilbereich und einen rechten Teilbereich umfasst, die sich zum zweiten Zeitpunkt von gegenüberliegenden Seitenbereichen erstrecken und im gefüllten Zustand in Anlage kommen.

15. Airbag-Anordnung (106), die im Frontbereich eines Kraftfahrzeugs (400) angeordnet oder anordenbar ist, umfassend:
mindestens einen Aufprallabschnitt (112), der dazu ausgebildet ist, Kräfte in Fahrtrichtung (118) auf einen Verkehrsteilnehmer (1) zu übertragen;
mindestens einen Rückhalteabschnitt (114), der dazu ausgebildet ist, Kräfte entgegen der Fahrtrichtung (118) auf den Verkehrsteilnehmer (1) zu übertragen; und
eine Vorrichtung (100) gemäß einem der Ansprüche 1 bis 14 und/oder eine Treiberschnittstelle (108), die mit der Vorrichtung (100) in Signalaustausch steht oder bringbar ist.

## Claims

1. A device (100) for reducing injury to a road user (1) in the event of collision with a motor vehicle (400), comprising:
at least one sensor (102) or a sensor interface (104) for sensor data for sensing a road user (1) in the travel path of the motor vehicle (400);
a driver interface (108) for inflating an airbag arrangement (106) in the front region (402) of the motor vehicle (400), wherein the airbag arrangement (106) comprises at least one impact section (112) which is designed to transmit forces onto the road user in the direction of travel (118), and comprises at least one restraining section (114) which is designed to transmit forces onto the road user counter to the direction of travel (118); and
a controller (110) which is connected to the driver interface (108) and is designed to inflate the at least one impact section (112) at a first point in time and to inflate the at least one restraining section (114) at a later, second point in time, in reaction to the sensing of the road user (1),
**characterized in that**
the controller (110) is also designed to calculate in advance a trajectory of the road user (1) and a trajectory of the motor vehicle (400) and to determine the second point in time on the basis of a section of the trajectories which are calculated in advance.

2. The device according to Claim 1, wherein after the second point in time the airbag arrangement (106) forms an intermediate space (116) between the at least one impact section (112) and the at least one restraining section (114), with the purpose of receiving the road user (1).

3. The device according to Claim 2, wherein the at least one restraining section (114) bounds the intermediate space (116) in the direction of travel (118), and/or wherein the at least one impact section (112) bounds the intermediate space (116) with respect to the motor vehicle (400).

4. The device according to one of Claims 1 to 3, wherein the device (100) is designed to keep the at least one impact section (112) and/or the at least one restraining section (114) inflated until the motor vehicle (400) is at a standstill.

5. The device according to one of Claims 1 to 4, wherein respectively arranged in or on the at least one impact section (112) and/or at least one restraining section (114) is at least one gas generator for inflating the corresponding section, which gas generator can be activated by means of the controller (110) via the driver interface (108) .

6. The device according to one of Claims 1 to 5, wherein at least one of the restraining sections (114) is fluidically connected to at least one of the impact sections (112).

7. The device according to one of Claims 1 to 6, wherein the inflated airbag arrangement (106) comprises at least one side section which bounds the intermediate space (116) transversely with respect to the direction of travel (118).

8. The device according to one of Claims 1 to 7, wherein the inflated airbag arrangement (106) comprises at least one base section (120) which terminates the intermediate space (116) towards the underlying surface and/or is spatially separated from a chassis of the motor vehicle (400) .

9. The device according to Claim 7 or 8, wherein the base section (120) and/or at least one of the side sections are respectively fluidically connected to the impact section (112) or the restraining section (114).

10. The device according to one of Claims 1 to 9, wherein the inflated airbag arrangement (106) is also designed to transmit forces in the vertical direction.

11. The device according to one of Claims 1 to 10, wherein the controller (110) is designed to sense a road user (1) without a cabin on the basis of the sensor data.

12. The device according to one of Claims 1 to 11, wherein the controller (110) is also designed to determine the first point in time on the basis of the intersection of the trajectories which are calculated in advance.

13. The device according to one of Claims 1 to 12, wherein the impact section (112) and/or the restraining section (114) comprise a plurality of partial regions which are accommodated in spatially separate regions of the front region (402) of the motor vehicle (400) before the respective point in time.

14. The device according to one of Claims 1 to 13, wherein the restraining section (114) comprises a left-hand partial region and a right-hand partial region which extend from opposite side regions at the second point in time and abut against one another in the inflated state.

15. An airbag arrangement (106) which is or can be arranged in the front region of a motor vehicle (400), comprising:
at least one impact section (112) which is designed to transmit forces onto a road user (1) in the direction of travel (118);
at least one restraining section (114) which is designed to transmit forces onto the road user (1) counter to the direction of travel (118); and
a device (100) according to one of Claims 1 to 14 and/or a driver interface (108) which is in a signal-exchanging relationship or can be placed in a signal-exchanging relationship with the device (100) .

## Revendications

1. Dispositif (100) permettant de limiter les dommages d'un usager de la route (1) lors d'un choc avec un véhicule à moteur (400), comprenant :
au moins un capteur (102) ou une interface de capteur (104) pour des données de capteur afin de saisir un usager de la route (1) dans le chemin d'un véhicule à moteur (400) ;
une interface pilote (108) pour le remplissage d'un système d'airbag (106) dans la zone frontale (402) du véhicule à moteur (400), dans lequel le système d'airbag (106) comprend au moins une section d'impact (112), laquelle est réalisée pour transférer sur l'usager de la route des forces dans la direction de déplacement (118) et comprend au moins une section de retenue (114), laquelle est réalisée pour transférer sur l'usager de la route des forces contraires à la direction de déplacement (118) ; et
une commande (110) reliée à l'interface pilote (108), laquelle est réalisée pour remplir l'au moins une section d'impact (112) jusqu'à un premier instant en réaction à la saisie de l'usager de la route (1), et pour remplir l'au moins une section de retenue (114) jusqu'à un deuxième instant ultérieur,
**caractérisé en ce que** la commande (110) est en outre réalisée pour prévoir, sur la base des données de capteur, une trajectoire de l'usager de la route (1) et une trajectoire du véhicule à moteur (400), et pour déterminer le deuxième instant à partir d'un segment de la trajectoire prévue.

2. Dispositif selon la revendication 1, dans lequel le système d'airbag (106) réalise, après le deuxième instant, un espace intermédiaire (116) pour recevoir l'usager de la route (1) entre l'au moins une section d'impact (112) et l'au moins une section de retenue (114) .

3. Dispositif selon la revendication 2, dans lequel l'au moins une section de retenue (114) délimite l'espace intermédiaire (116) dans la direction de déplacement (118), et/ou dans lequel l'au moins une section d'impact (112) limite l'espace intermédiaire (116) au véhicule à moteur (400).

4. Dispositif selon l'une des revendications 1 à 3, dans lequel le dispositif (100) est réalisé de façon à maintenir remplie l'au moins une section d'impact (112) et/ou l'au moins une section de retenue (114) jusqu'à l'immobilité du véhicule à moteur (400).

5. Dispositif selon l'une des revendications 1 à 4, dans lequel au moins un générateur de gaz est respectivement agencé dans ou sur l'au moins une section d'impact (112) et/ou l'au moins une section de retenue (114) afin de remplir la section correspondante, lequel est actionnable avec la commande (110) par le biais de l'interface pilote (108) .

6. Dispositif selon l'une des revendications 1 à 5, dans lequel au moins une des sections de retenue (114) est reliée fluidiquement à au moins une des sections d'impact (112) .

7. Dispositif selon l'une des revendications 1 à 6, dans lequel le système d'airbag (106) rempli comprend au moins une section latérale, laquelle délimite l'espace intermédiaire (116) transversalement à la direction de déplacement (118).

8. Dispositif selon l'une des revendications 1 à 7, dans lequel le système d'airbag (106) rempli comprend au moins une section de fond (120), laquelle ferme l'espace intermédiaire (116) à la chaussée et/ou le sépare spatialement d'un train de roulement du véhicule à moteur (400).

9. Dispositif selon la revendication 7 ou 8, dans lequel la section de fond (120) et/ou au moins une des sections latérales sont reliées fluidiquement respectivement à la section d'impact (112) ou à la section de retenue (114).

10. Dispositif selon l'une des revendications 1 à 9, dans lequel le système d'airbag (106) rempli est en outre réalisé pour transférer des forces dans la direction verticale.

11. Dispositif selon l'une des revendications 1 à 10, dans lequel la commande (110) est réalisée pour saisir un usager de la route (1) sans cabine sur la base des données de capteur.

12. Dispositif selon l'une des revendications 1 à 11, dans lequel la commande (110) est en outre réalisée pour déterminer le premier instant sur la base du segment de la trajectoire prévue.

13. Dispositif selon l'une des revendications 1 à 12, dans lequel la section d'impact (112) et/ou la section de retenue (114) comprennent plusieurs zones partielles, lesquelles sont disposées dans des zones spatialement séparées de la zone frontale (402) du véhicule à moteur (400) avant l'instant respectif.

14. Dispositif selon l'une des revendications 1 à 13, dans lequel la section de retenue (114) comprend une zone partielle gauche et une zone partielle droite, lesquelles s'étendent depuis des zones latérales opposées au deuxième instant et entrent en contact à l'état rempli.

15. Système d'airbag (106), lequel est ou peut être agencé dans la zone frontale d'un véhicule à moteur (400), comprenant :
au moins une section d'impact (112), laquelle est réalisée pour transférer sur un usager de la route (1) des forces dans la direction de déplacement (118) ;
au moins une section de retenue (114), laquelle est réalisée pour transférer sur l'usager de la route (1) des forces contraires à la direction de déplacement (118) ; et
un dispositif (100) selon l'une des revendications 1 à 14 et/ou une interface pilote (108), laquelle se trouve ou peut être placée en transmission de signaux avec le dispositif (100).
